# EUROPÄISCHE PATENTANMELDUNG

(11) **EP 4 841 445 A1**
(43) Veröffentlichungstag der Anmeldung: **18.11.2026**
(21) Anmeldenummer: 26177321.2
(22) Anmeldetag: 07.05.2026
(51) Int. Cl.: G06F 11/07, G06F 11/32

(54) **VERFAHREN UND TECHNISCHES GERÄT ZUR GENERIERUNG EINES DIAGNOSECODES, SOWIE DIAGNOSECODE ZUR BESCHREIBUNG EINES FEHLERS IN EINEM TECHNISCHEN GERÄT**

(30) Priorität: 12.05.2025 AT 503182025
(71) Anmelder: AVL DiTest GmbH, 8020 Graz (AT); AVL DiTest GmbH, 90556 Cadolzburg (DE)
(72) Erfinder: Lytvyn, Mykhailo, 8052 Graz (AT); Leitgeb, Thomas, 8330 Feldbach (AT); Kiefhaber, Lena, 90613 Zirndorf (DE); Stemper, Sven, 90765 Fürth (DE)
(74) Vertreter: Weiss Patentanwalts GmbH

(57) **Zusammenfassung**

Um ein Verfahren bereitzustellen, das eine schnelle und sichere Datenübertragung von Diagnosedaten zwischen einem technischen Gerät (G) und einem Servicetechniker ermöglicht, werden Identifikations-Information (ID) zur Identifikation des technischen Geräts (G) und Fehler-Information (IF) zur Beschreibung eines Fehlers (F) in eine Geräte-Fehler-Beschreibungsdatei (TXT) zusammengeführt, und es wird die Geräte-Fehler-Beschreibungsdatei (TXT) in einen maschinell lesbaren Diagnosecode (C) konvertiert.

## Beschreibung

### Technisches Gebiet

Die gegenständliche Erfindung betrifft ein computerimplementiertes Verfahren und ein technisches Gerät zur Generierung eines maschinell lesbaren Diagnosecodes, sowie einen Diagnosecode zur Beschreibung eines Fehlers in einem technischen Gerät.

### Stand der Technik

In verschiedenen technischen Anwendungen werden technische (Feld-)Geräte eingesetzt, um Prozessvariablen zu erfassen, d.h. zu messen, und/oder zu beeinflussen. Zur Servicierung von Klimaanlagen von Automobilen werden beispielsweise Klimaservicegeräte eingesetzt, die Sensoren aufweisen, wie Durchflusssensoren, Drucksensoren, Temperatursensoren, Leitfähigkeitssensoren usw., um Prozessvariablen wie Füllstand, Durchfluss, Druck, Temperatur, pH-Wert, Leitfähigkeit usw. von Kühlmitteln zu erfassen. Zur Beeinflussung von Prozessvariablen dienen wiederum Aktuatoren, zum Beispiel Ventile oder Pumpen oder Servomotoren, mit denen auf Prozessvariablen eingewirkt wird, insbesondere auf Basis von Testzyklen und/oder ermittelten Messwerten, um schnelle, zuverlässige und insbesondere exakte Funktionstests durchzuführen. Im Rahmen der nachfolgenden Ausführungen werden demgemäß Vorrichtungen als technische Geräte verstanden, die über geeignete Messtechnik verfügen, um prozessrelevante Informationen messtechnisch zu erfassen, gegebenenfalls aber auch über geeignete Aktuatorik und entsprechende Steuereinheiten, um einen mittels des Geräts umgesetzten Prozess notwendigenfalls auch beeinflussen und damit testen zu können. Unter den gegenständlichen Begriff eines technischen Geräts fallen folglich Klimaservicegeräte, Prüfstände, wie Motorprüfstände oder Antriebsstrangprüfstände oder Vollfahrzeugprüfstände, Produktionsanalgen, Haushaltsgeräte, Messgeräte etc.

Wenn bei einem technischen Gerät im Feldeinsatz ein Fehler auftritt, wird im bekannten Stand der Technik üblicherweise eine Fehlermeldung angezeigt, insbesondere über eine graphische Ausgabeeinheit des technischen Gerätes, wie über ein Display, in vorteilhafter Weise in Verbindung mit der Darstellung eines Fehlercodes zur Identifizierung des Fehlers. Ein Anwender oder Bediener, der vor Ort ist und mit dem Gerät arbeitet, setzt sich, wenn er Hilfe bei der Lösung des Problems und also bei der Behebung des Fehlers benötigt, im Fehlerfall über Telefon oder E-Mail oder einen anderen Kommunikationsweg mit einer Servicestelle in Verbindung, d.h. mit einem fachkundigen Servicetechniker. Um eine möglichst schnelle und effiziente Reparatur sicherzustellen, müssen hierbei die richtigen Informationen über das Problem ermittelt und korrekt kommuniziert werden. Das setzt voraus, dass der Bediener den aufgetretenen Fehler richtig beschreiben kann, die zur Beschreibung des Fehlers benötigten Information kennt und/oder in der Lage ist, diese zu ermitteln. Überdies muss der Bediener im Stande sein, eine exakte und verständliche Fehlerbeschreibung zu vermitteln. Diese Aspekte führen bei komplexen Systemen, wie bei modernen Klimaservicegeräten, regelmäßig zu praktischen Problemen, insbesondere bei mangelndem Verständnis oder bei mangelnder Sachkenntnis des Benutzers bzw. Bedieners.

Eine Möglichkeit, um diesen Prozess zu erleichtern, besteht darin, das Gerät z.B. über eine Netzwerkverbindung (zB Bluetooth, WLAN oder ähnliches) mit dem Internet zu verbinden, so dass sich ein Servicetechniker remote mit dem Gerät verbinden kann, um in weiterer Folge selbst eine Analyse der fehlerbehafteten Situation durchzuführen. Auch ist denkbar, dass das Gerät selbständig Daten aufzeichnet, die bei der Problemanalyse ausgewertet werden können und die über ein Netzwerk von außen abgefragt werden können. Das setzt allerdings voraus, dass eine entsprechende Datenverbindung am Nutzungsort des Gerätes vorhanden ist, bzw. dass deren Nutzung zu Servicezwecken zulässig ist. In beiden der vorgenannten Fälle (selbstständige Remotezugriff durch den Servicetechniker, selbstständige Aufzeichnung von Daten) besteht in vielen Fällen die Sorge von Anlagenbetreibern, dass sensible Daten abgefragt werden könnten. Auf Prüfständen erfolgt die Testung neu entwickelter Prüflinge üblicherweise unter strengen Geheimhaltungsvorkehrungen, was von Prüfstandsbetreibern hohe Sensibilität hinsichtlich Datensicherheit erfordert. Generell ist eine Netzwerkanbindung aus Gründen der betrieblichen Sicherheit oft schlicht nicht zulässig.

Vergleichbare Situationen ergeben sich, wenn Wartungsarbeiten an technischen Geräten im Feldeinsatz durchgeführt werden müssen. Typischerweise sind Wartungsarbeiten gemäß einer schriftlichen Anleitung vorzunehmen, die oft in einem Servicehandbuch beschrieben sind. Servicehandbücher sind jedoch oftmals nicht auf dem neuesten Stand. Insbesondere im Fall von im bekannten Stand der Technik regelmäßig stattfindenden Software-Updates ergibt sich oftmals eine Diskrepanz zwischen der ausgelieferten Wartungsanleitung und den zu einem gegebenen Zeitpunkt tatsächlich erforderlichen Wartungsschritten. Es ist in solchen Fällen für Hersteller nicht immer möglich, stets aktuelle und korrekte Informationen zur Wartung für den Bediener vor Ort zur Verfügung zu stellen. Auch hier kommt es häufig zu Situationen, die mit den vorstehend beschriebenen Problemen behaftet sind, und wo die Möglichkeit eröffnet werden muss, einem geschulten Servicetechniker kontrolliert Zugriff zum Gerät zu geben. Die Freigabe des Zugriffs darf dabei nicht kompliziert sein, und auch für den letztlich zugreifenden Servicetechniker müssen die erforderlichen Informationen übersichtlich und klar zur Verfügung stehen.

### Aufgabe

Der Erfindung liegt demnach die Aufgabe zugrunde, ein Verfahren bereitzustellen, das eine sichere Datenübertragung zwischen einem Feldgerät und einem Servicetechniker ermöglicht. Dabei soll gewährleistet sein, dass die für den Servicetechniker nötigen Informationen in einfacher, korrekter und effizienter Weise ermittelt und freigegeben werden können.

### Lösung

Erfindungsgemäß ist zur Lösung dieser Aufgabe für das eingangs genannte Verfahren vorgesehen, Identifikations-Information zur Identifikation des technischen Geräts sowie Fehler-Information zur Beschreibung des Fehlers bereitzustellen, die Identifikations-Information und die Fehler-Information in eine einzelne Geräte-Fehler-Beschreibungsdatei zusammenzuführen, und die Geräte-Fehler-Beschreibungsdatei in den maschinell lesbaren Diagnosecode zu konvertieren.

Durch die Erfindung wird damit im Fehlerfall ein Code angezeigt, optional zusätzlich zu einer Fehlermeldung auf dem Display des Gerätes, der die vollständige Information beinhaltet, die für eine Problembehebung nötig ist, und der z.B. über ein Mobiltelefon mit entsprechender App ausgelesen werden kann. Nach Auslesen des Codes kann in weiterer Folge bevorzugt einen Link zu einer Website einer zugehörigen Serviceorganisation geöffnet werden, sodass durch Auslesen nur eines einzelnen Codes die nötigen Informationen über das Gerät (z.B. Seriennummern, Versionsnummern der Software und ähnliches) sowie über den Fehler (z.B. Fehlercodes, Messwerte, Berechnungsergebnisse und ähnliches) automatisch übermittelt werden können. Das stellt im Vergleich zum bekannten Stand der Technik eine wesentliche Vereinfachung dar, wo in mehreren Schritten mühsam die nötigen Informationen separat übermittelt werden müssen, meist durch das Erfassen von Informationen aus unterschiedlichen Informationsquellen (eine erste Informationsquelle für die Gerätekennung, eine zweite Informationsquelle für eine Auswirkung des Fehlers, eine dritte Informationsquelle für eine Ursache des Fehlers usw.). Die Erfindung vereinfacht folglich das Erzeugen des Codes und das Übermitteln von nötiger Information.

In einer besonders vorteilhaften Weise kann der Bediener ferner auf eine Website geleitet werden, auf der seine Daten, sowie eine Fehlerbeschreibung bereits voreingestellt sind. Gegebenenfalls können Daten über den Anwender mit einer Nutzerdatenbank für bereits registrierte Geräte abgeglichen werden (z.B. der Gerätestandort oder die bevorzugte Art der Kontaktaufnahme). Bestätigt der Benutzer die Eingabe, kann automatisiert ein Servicetechniker in Kenntnis gesetzt werden. Die Entscheidung, ob dieser Weg genützt wird, wie generell ob und wann im Rahmen der Erfindung Informationen übermittelt werden, liegt jedoch stets zur Gänze im Ermessen des Benutzers. Damit ist die erforderliche Datensicherheit stets gewährleistet.

Eine mögliche Ausführung des Diagnosecodes ist die Verwendung eines QR-Codes, wobei im Rahmen der Erfindung ebenso ein Strichcode oder ein Matrix-Code oder ein QR-Code oder ein HCCB-Code verwendet werden können. Insbesondere QR-Codes sind jedoch weit verbreitet und können mit handelsüblichen Mobiltelefonen verarbeitet werden.

Generell kann im Rahmen der Erfindung der Datenaustausch mittels eines Mobiltelefons erfolgt, sodass keine direkte Verbindung zwischen einem Wartungsserver und mit dem eigentlichen, technischen Gerät notwendig ist. Der Diagnosecode weist bevorzugt eine fixe URL auf, sowie eine gerätespezifischen Kennung und den Fehlercode. Diese Informationen können im gegenständlichen Fall aus der vorstehend genannten Geräte-Fehler-Beschreibungsdatei in einen QR-Code gewandelt werden. Ändert sich in diesem Fall der Fehlercode und bleiben aber die übrigen Geräteinformationen gleich, so ändert sich (abhängig von der Position des Fehlercodes im Text) gegebenenfalls nur ein Teil des QR-Codes, oder aber auch der gesamte QR-Code. Wird ein gemäß den vorstehenden Ausführungen erstellter QR-Code gescannt, kann mit Übertragung der Informationen bzw. Daten auch unmittelbar ein Serviceticket erstellt werden. In einer vorteilhaften Weise können einem Bediener automatisiert, d.h. noch bevor ein Servicetechniker sich des Fehlers angenommen hat, eine detailliertere Fehlerbeschreibung und falls vorhanden Lösungsvorschläge angezeigt werden.

Weitere vorteilhafte Aspekte der Erfindung sind in den abhängigen Ansprüchen angegeben. In vorteilhafter Weise kann beispielsweise vorgesehen sein, den Geräte-Fehler-Beschreibungsdatei vor der Konvertierung in den Diagnosecode zu komprimieren, um Rechenkapazität und/oder Übertragungskapazität zu sparen, oder es kann im Fall des Auftretens eines neuen Fehlers stets ein neuer Diagnosecode generiert werden, um stets eine aktuelle Fehlerbeschreibung vorliegend zu haben.

Aufbauend auf den Informationen, die gemäß den vorstehend beschriebenen Schritten gebündelt wurden, kann nun ein anhand der Informationen beschriebener Fehler behoben werden. Dazu können als konkrete Schritte vorgesehen werden: Anzeigen des Diagnosecodes auf einer graphischen Ausgabeeinheit des technischen Geräts; Auslesen der Identifikations-Information und der Fehler-Information durch Scannen des Diagnosecodes mittels eines mobilen Kommunikationsgerätes, vorzugsweise mittels eins Smartphones; Übermitteln der Identifikations-Information und der Fehler-Information an einen Wartungs-Server, vorzugsweise indem ein Bediener auf eine mit dem Wartungs-Server verknüpfte Website geleitet wird, auf der die übermittelte Identifikations-Information und die Fehler-Information in eine Maske übertragen werden und vom Bediener auf der Website freigegeben werden; Ermittlung von Arbeitsschritten zur Behebung des Fehlers anhand der an den Wartungs-Server übertragene Identifikations-Information und Fehler-Information; Übermitteln der Arbeitsschritte an das Kommunikationsgerätes; Beseitigung des Fehlers durch Ausführen der an das Kommunikationsgerät übermittelten Arbeitsschritte, vorzugsweise durch einen Bediener des technischen Gerätes.

Wie eingangs angeführt, wird die vorstehend genannte Aufgabe ferner durch ein technisches Gerät gelöst, das ausgestaltet ist, die vorstehend beschriebenen Schritte auszuführen, sowie durch einen Diagnosecode zur Beschreibung eines Fehlers in einem technischen Gerät.

### Detaillierte Beschreibung

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Anordnung aus einem technischen Gerät, einem Bediener und einem Wartungs-Server zur Durchführung des erfindungsgemäßen Verfahrens,
Fig.2 eine erfindungsgemäße Anzeige auf einem Display eines technischen Gerätes,
Figs.3a und 3b erfindungsgemäße QR-Codes,
Fig.4 einen Strichcode und
Fig.5 einen Maxicode zur Umsetzung der Erfindung.

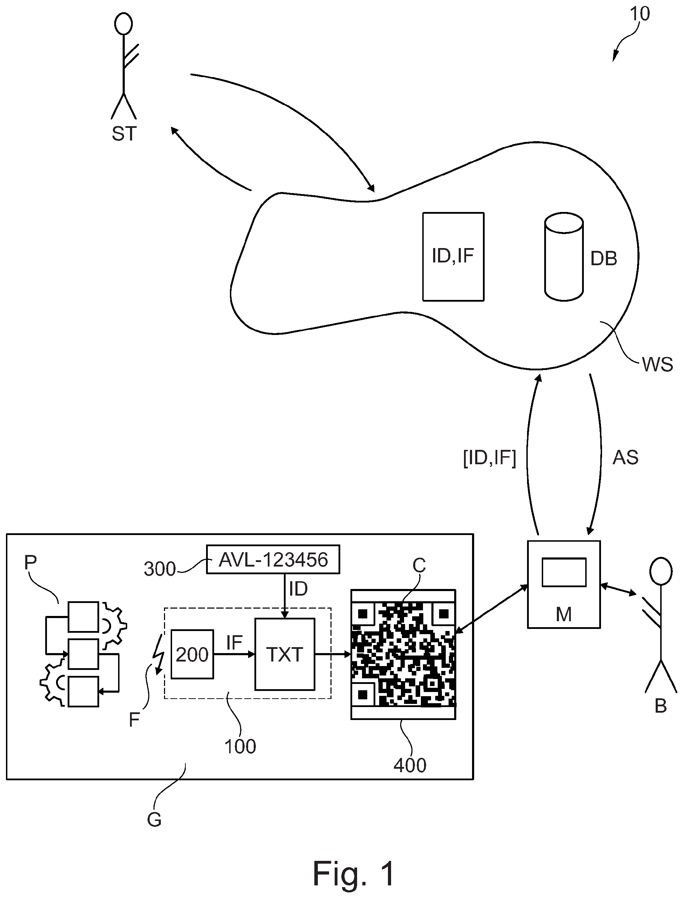

Fig.1 zeigt eine Anordnung 10, mit der das erfindungsgemäße Verfahren durchgeführt werden kann. Die Anordnung 10 umfasst ein technisches Gerät G, bei dem es sich in einer bevorzugten Weise um eine Servicestation für Automobil-Klimaanlagen oder um ein Abgasmesssystem oder um ein Diagnosesystem für automotive Anwendungen oder um ein Batterie-Konditioniersystem handeln kann, sowie einen Bediener B, einen Wartungs-Server WS und einen Servicetechniker ST. Wie in Fig.1 dargestellt, dient das technische Gerät G der Realisierung eines technischen Prozesses P, bei dem es sich im Fall einer Klimaanlagen-Servicestation um einen Serviciervorgang handeln kann.

Bei den vorgenannten Beispielen von technischen Geräten G können unterschiedliche Fehler F auftreten. Bei Servicestationen für Automobil-Klimaanlagen können Leckagen im Kältemittelkreislauf, Kompressorprobleme oder Defekte in der verbauten Elektronik auftreten. Bei Abgasmesssystemen können Sensorfehler, beispielsweise aufgrund von Verrußung, Kalibrierungsprobleme oder Schwierigkeiten in der Abgasabsaugung auftreten, oder es können aufgrund hoher thermischer Belastungen Sensoren überhaupt ausfallen. Batterie-Konditioniersysteme können Ladefehler, Temperaturprobleme oder Defekte in der Hardware aufweisen. All diese Fehlerquellen können die Funktionalität der jeweiligen Systeme beeinträchtigen und zu ungenauen Messungen, ineffizienten Prozessen oder sogar Schäden führen. In offensichtlicher Weise gilt es, frühzeitig und effektiv auf entsprechende Fehler F zu reagieren.

Das in Fig.1 gezeigte technische Gerät G weist zu diesem Zweck eine Steuereinheit 100, eine Fehlerdetektionseinheit 200, einen nichtflüchtigen Speicher 300 und eine Ausgabeeinheit 400 auf. Mittels des nichtflüchtigen Speichers 300 werden sich nicht ändernde Identifikations-Informationen ID zur Identifikation des technischen Geräts G bereitgestellt. Mittels der Fehlerdetektionseinheit 200 wird erkannt, wann ein Fehler F im Gerät G vorliegt und es wird entsprechende Fehler-Information IF zur Beschreibung des Fehlers F generiert. Mögliche Realisierungen einer Steuereinheit 100 sind unter anderem durch mikroprozessorbasierte Hardware, wie beispielsweise Mikrocontroller, und integrierte Schaltungen (ASIC, FPGA) gegeben.

Wie an späterer Stelle eingehend erläutert wird, kann die Identifikations-Information ID beispielsweise eine URL und/oder eine gerätespezifische Kennung und/oder eine Seriennummer und/oder eine Versionsnummer zur Identifikation des Gerätes aufweisen, und die Fehler-Information IF kann beispielsweise einen Fehlercode und/oder zumindest einen Messwert und/oder zumindest ein Berechnungsergebnis aufweisen, woraus ein Servicetechniker ST ein detailliertes Bild einer vorliegenden, fehlerbehafteten Situation ableiten kann und geeignete Arbeitsschritte AS zur Fehlerbehebung ableiten kann. Es sei angemerkt, dass im Rahmen der Erfindung Flexibilität hinsichtlich der konkreten Ausgestaltung der genannten Komponenten besteht. Vor allem die Fehlerdetektionseinheit 200 kann je nach Anwendung unterschiedlich ausgeführt und geeignet adaptiert werden, und z.B. eine autonome Subeinheit des Gerätes G darstellen, die bevorzugt selbsttätig Sensorwerte miteinander und/oder mit vorgegebenen Grenzwerten vergleicht und im Fall einer Abweichung oder Überschreitung auf das Vorliegen eines Fehlers F schließt. Ebenso ist denkbar, dass eine Fehlerdetektionseinheit 200 beispielsweise in Form eines Notaus-Tasters umgesetzt ist, der vom Bediener B in einem Fehlerfall betätigt werden kann. Weitere Varianten zur Umsetzung einer Fehlerdetektion sind unter anderem automatische Testroutinen beim Start des Gerätes G oder nach der Durchführung einer Service- oder Messprozedur, eine Prüfung von im Gerät G vorgesehenen Betriebsmitteln (z.B. bei einer Klimaanlage: ist noch ausreichend Kältemittel in einer Gasflasche, ...), oder eine Prüfung auf unplausible und/oder verbotene Nutzereingaben usw. Erfindungsgemäß erlaubt die Steuereinheit 100 ein Zusammenführen der Identifikations-Information ID und der Fehler-Information IF in eine einzige Geräte-Fehler-Beschreibungsdatei TXT, sodass erst eine gesamte, sämtliche für eine Fehlebehebung nötige Informationen beinhaltende, Geräte-Fehler-Beschreibungsdatei TXT in einen maschinell lesbaren Diagnosecode C konvertiert wird, und insbesondere separate Konversionen kleinteiliger Teilinformationen vermieden werden, wie das insbesondere im Stand der Technik der Fall ist. Mittels der in Fig.1 gezeigten Ausgabeeinheit 400 wird ein Diagnosecode C ausgegeben, bevorzugt graphisch, sodass beispielsweise ein optischer Scan möglich wird, also eine, vorzugsweise optoelektronische, Übertragung des Diagnosecodes C an ein mobiles Kommunikationsgerät M, beispielsweise in Form eines Smartphones oder eines Tabletcomputers oder eines anderen Bedien- und/oder Lesetools.

Anhand des gezeigten Gerätes G kann demnach das beschriebene, erfindungsgemäße Verfahren zur Generierung eines maschinell lesbaren Diagnosecodes C zur Beschreibung eines Fehlers F in einem technischen Gerät G durchgeführt werden. Gemäß den vorgenannten Eignungen der Komponenten 100, 200 und 300 werden dazu zunächst die Identifikations-Information ID zur Identifikation des technischen Geräts G und die Fehler-Information IF zur Beschreibung des Fehlers F bereitgestellt, daran anschließend die Identifikations-Information ID und die Fehler-Information IF in die genannte Geräte-Fehler-Beschreibungsdatei TXT zusammengeführt, und darauf aufbauend die Geräte-Fehler-Beschreibungsdatei TXT in den maschinell lesbaren Diagnosecode C konvertiert, um den angestrebten, kompakten Diagnosecodes C zu generieren.

Optional kann die Geräte-Fehler-Beschreibungsdatei TXT im Zuge der erfindungsgemäßen Code-Generierung komprimiert werden. Eine Kompression stellt im Rahmen der Erfindung jedoch keine Notwendigkeit dar, und ist oftmals auch nicht erforderlich, da vielfach nur geringe Datenmengen vorliegen. Im Fall größerer Datenmengen bietet der Umstand, dass im Rahmen der Erfindung zunächst sämtliche Daten in einer einzelnen Geräte-Fehler-Beschreibungsdatei TXT zusammengefasst werden, jedoch die vorteilhafte Möglichkeit, mit nur einem einzigen Kompressionsvorgang die letztlich zu übertragenden Datenmenge signifikant zu reduzieren und sohin letztlich eine schnellere Übertragung zu erlauben. Insbesondere in Fällen, in denen zur Fehlerbeschreibung Messdaten übermittelt werden, ist die gegenständlich mögliche, konzentrierte und an lediglich einer Stelle für eine Datei durchzuführende Datenkompression oftmals vorteilhaft. Als Geräte-Fehler-Beschreibungsdatei TXT kann insbesondere eine aus der Informationstechnik wohlbekannte txt Datei eingesetzt werden. Grundsätzlich ist aber ebenso denkbar, eine Binärdatei als Geräte-Fehler-Beschreibungsdatei TXT einzusetzen.

Zur Komprimierung von Daten, insbesondere von Fehlerdaten wie Fehlercodes und Messdaten, können im Rahmen der Generierung von Diagnose-Codes verschiedene Methoden eingesetzt werden, die im Wesentlichen in sogenannte verlustfreie und verlustbehaftete Kompressionsverfahren eingeteilt werden können. Im Anwendungsgebiet der Erfindung sind verlustfreie Methoden wie die Huffman-Codierung, LZ77/78 (Lempel-Ziv) und Run-Length-Codierung (RLE) oftmals vorteilhaft. Verlustfreie Methoden ermöglichen es, die Originaldaten vollständig wiederherzustellen, was im gegenständlichen Zusammenhang üblicherweise erforderlich ist. Durch die Reduzierung der Datengröße können beispielsweise kleinere QR-Codes erzeugt werden, was Platz spart und die Lesbarkeit verbessert, oder es kann in einem QR-Code mit vorgegebener Größe mehr Information übermittelt werden. Verlustbehaftete Kompressionsmethoden, die bei Medien wie Bildern und Audio eingesetzt werden, sind im gegenständlichen Rahmen hingegen meist ungeeignet, da sie zu einem Informationsverlust führen.

Im Rahmen der in Fig.1 dargestellten Anordnung 10 kann der Diagnosecode C nicht nur angezeigt werden, sondern insbesondere auch zur Kontaktierung von fachkundigem Supportpersonal herangezogen werden, z.B. eines Servicetechnikers ST. Dabei kann es sinnvoll sein, auch im Fall eines fehlerfreien Zustandes des Gerätes G einen Diagnosecode C zu generieren, in welchem ein Hinweis auf den fehlerfreien Zustand codiert wird, sodass z.B. ein Servicetechniker ST unmittelbar erkennen kann, dass zumindest kein detektierbarer Fehler vorliegt.

Das technische Gerät G kann hierzu auf einer graphischen Ausgabeeinheit 400 zunächst den Diagnosecode C anzeigen, welcher mittels eines mobilen Kommunikationsgerätes M, vorzugsweise eines Smartphones oder eines Tabletcomputers, gescannt werden kann. Durch das Scannen kann die Identifikations-Information ID und die Fehler-Information IF ausgelesen werden, und beispielsweise auf dem Kommunikationsgerät M zwischengespeichert werden. Demgemäß zwischengespeicherte Information kann weiters an einen Wartungs-Server WS übermittelt werden, bevorzugt indem der Bediener B auf eine mit dem Wartungs-Server WS verknüpfte Website weitergeleitet wird, und dort sein Einverständnis gibt, dass die ausgelesenen Identifikations-Informationen ID und Fehler-Informationen IF auf den Wartungs-Server WS hochgeladen werden. Dort kann die ausgelesene Information in eine Maske übertragen und vom Bediener B zur Weiterverarbeitung, z.B. für eine detaillierte Analyse, durch den Servicetechniker ST freigegeben werden. Der Servicetechniker ST kann nun anhand der übermittelten Daten Arbeitsschritte AS zur Behebung des vorliegenden Fehlers F ermitteln. Diese Arbeitsschritte AS können dann an das Kommunikationsgerät M zurückgesendet werden. Schließlich kann der Fehler F durch Ausführung der übermittelten Arbeitsschritte AS behoben werden, in bevorzugter Weise direkt durch den Bediener B.

Es können jedoch auch im Wartungs-Server WS selbst gerätespezifische und/oder anwendungsspezifische Informationen vorhanden sein, die, wie dargestellt, in eigenen Datenbanken auf dem Wartungs-Server WS gespeichert sein können. Bei den Datenbanken DB kann es sich um herstellerspezifische Datenbanken DB oder kundenspezifische Datenbanken DB handeln, sodass der Servicetechniker ST oder aber gegebenenfalls auch der Bediener B selbst einen Abgleich der hochgeladenen Information mit Informationen aus den Datenbanken vornehmen kann, um einen vorliegenden Fehler F zu beheben.

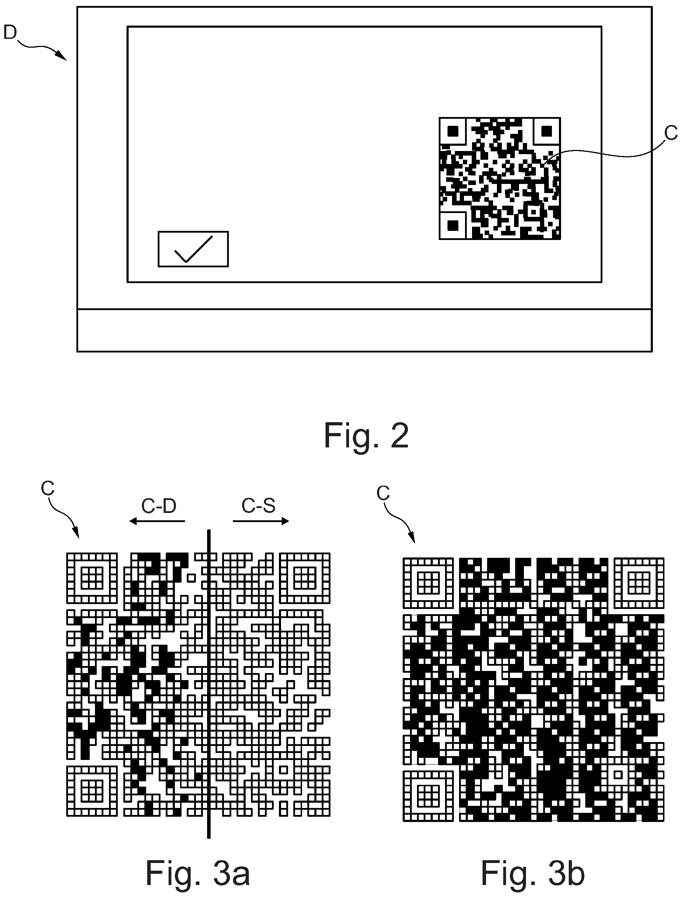

Fig.2 zeigt weiters eine erfindungsgemäße Anzeige auf einem Display 400 eines technischen Gerätes. Im gezeigten Beispiel umfasst der im Diagnosecode C kodierte Text eine Portal-URL, mit der auf ein Portal in einem Wartungs-Server WS zugegriffen werden kann, erweitert um zusätzliche Parameter. In den zusätzlichen Parametern ist im gegenständlichen Fall ein konstanter Teil vorgesehen, der firmwarespezifische (Firmware-Version) und gerätespezifische (BO-Nummer und Seriennummer) beinhaltet, und ein variabler, dynamischer Teil, in dem situationsspezifische Details abgebildet sind (z.B. Fehlercode). Ausgeschrieben lautet der Text im gegenständlichen Fall https://my.avlditest.com/device-repair-ti-cket?fw=0.2.36&bo=8124&sn=1204&e=30071, mit den Bestandteilen "base URL" (= https://my.avlditest.com/device-repair-ticket), "firmware" (= ?fw=0.2.36), "device type" (= bo=8124), "serial" (= sn=1204), und "error code" (= e=30071). Die zusätzlichen Parameter können in einer beliebigen Reihenfolge angegeben werden.

Wird, wie im anhand von Fig.2 beschriebenen Beispiel, der Fehlercode als letzter Parameter angegeben, ergibt sich im generierten QR-Code ein konstanter Teil in der rechten Hälfte des Diagnosecodes C, wie in Fig.3a dargestellt. Die strichlierten Quadrate stellen hierbei Unterschiede zwischen den QR-Codes für zwei verschiedene Fehlercodes (Fehler 39999 und Fehler 30000) dar. Wie unmittelbar erkannt werden kann, weist diese Ausgestaltung bei demselben Gerät G stets einen gleichbleibenden Anteil auf. Insgesamt liegt aber dennoch ein dynamischer, sich also von Fall zu Fall ändernder Diagnosecode C vor, da von Fehlerfall zu Fehlerfall, vorausgesetzt es tritt ein unterschiedlicher Fehler auf, stets ein unterschiedlicher Diagnosecode C generiert wird.

Wenn Fehlercodes jedoch nicht als letzter Parameter in der Geräte-Fehler-Beschreibungsdatei TXT angeordnet werden, verteilen sich die Unterschiede zwischen Diagnosecodes C in Form von QR-Codes über den gesamten Code, wie anhand von Fig.3b erkennbar. Diese Ausführung ist vielfach vorteilhaft, weil auf diese Weise Verwechslungsgefahr zwischen Diagnosecodes C auf ein Minimum reduziert werden können.

Generell erweist es sich im Rahmen der gegenständlichen Erfindung vielfach als günstig, wenn im Fall des Auftretens eines neuen Fehlers F je ein neuer Diagnosecode C generiert wird. Im Fall des Auftretens einer Mehrzahl von Fehlern F1, F2 bedeutet das, dass für jeden Fehler F1, F2 ein eigener Diagnosecode C1, C2 generiert wird, wobei die Identifikations-Information ID je in gleicher Weise in den jeweiligen Diagnosecode C1, C2 übertragen wird und die Fehler-Information IF unterschiedlich auf den Diagnosecode C1, C2 wirkt, als je in voneinander unterschiedlicher Weise in den jeweiligen Diagnosecode C1, C2 übertragen wird. Auf diese Weise wird sichergestellt, dass stets korrekt der aktuell vorliegende Fehler F beschrieben wird, und nicht fälschlicherweise ein bereits vergangener und gegebenenfalls bereits behobener Fehler F.

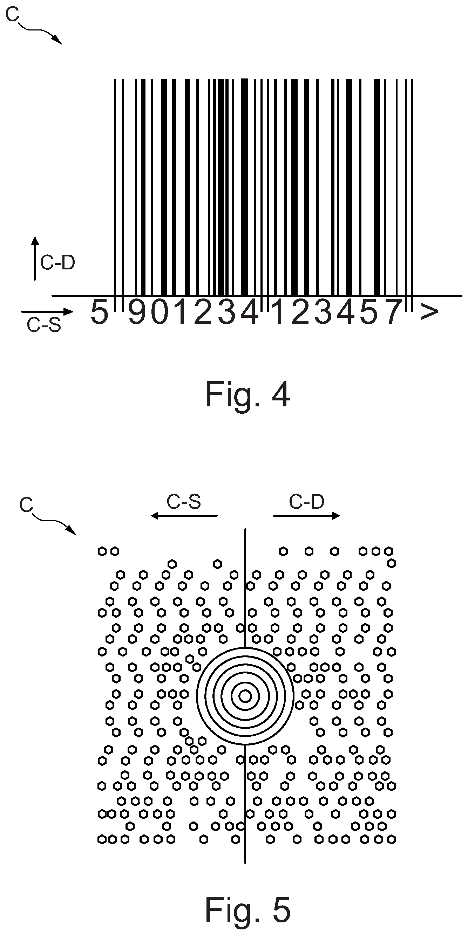

Wie bereits an früher Stelle erläutert, bietet die Erfindung Flexibilität hinsichtlich der Art der eingesetzten Diagnosecodes C. Konkret kann im Rahmen der Erfindung ein 1D-Code, vorzugsweise ein Strichcode, oder ein 2D-Code, vorzugsweise ein gestapelter Code oder ein Matrix-Code oder ein QR-Code oder ein HCCB-Code, als maschinell lesbarer Diagnosecode C generiert werden. Fig.4 zeigt zur Illustration dieses Prinzips einen Strichcode, in welchem gemäß dem erfindungsgemäßen Verfahren Identifikations-Information ID und Fehler-Information IF gespeichert sind. In Fig.5 ist demgegenüber ein ebenfalls erfindungsgemäß generierbarer Maxicode gezeigt, wo wie vorhin ein erster (statischer) und ein zweiter (dynamischer) Codeanteil vorgesehen sind. Wie im zuvor diskutierten Beispiel des QR-Codes gemäß Fig.3b ist es aber auch im Rahmen der Verwendung eines anderen Codetyps möglich, den gesamten Diagnosecode C vollständig dynamisch auszugestalten.

Das erfindungsgemäße Verfahren sowie das erfindungsgemäße Gerät G erlauben eine effiziente Codierung der für eine Fehlerbehandlung erforderlichen Informationen und damit insgesamt eine verbesserte Fehlerbehandlung. Aber auch die erfindungsgemäß generierten Diagnosecodes C selbst sind gegenüber aus dem Stand der Technik bekannten Codierungen vorteilhaft, da sie die erforderlichen Informationen über Gerät G und über Fehler F bündeln und kombiniert zur Verfügung stellen.

In einer weiteren, besonders vorteilhaften Ausgestaltung der Erfindung kann ferner vorgesehen werden, dass ein erfindungsgemäßer QR-Code nicht allgemein von geeigneten Lesegeräten eingelesen werden kann, z.B. durch ein Mobiltelefon mit einer geeigneten Kamera, sondern nur durch die Verwendung einer speziellen, QR-Code-spezifischen oder allgemein Geräte-Fehler-Beschreibungsdatei-spezifischen Applikation, also eines speziell auf den QR-Code abgestimmten Leseprogramms. Das kann beispielsweise erreicht werden durch die Verwendung einer eigens zu diesem Zweck vorgesehenen Sicherungscodierung, die nur von der Geräte-Fehler-Beschreibungsdatei-spezifischen Applikation decodiert werden kann. Auf diese Weise kann die Sicherheit und die Kontrolle der übermittelten Daten noch weiter erhöht werden.

## Patentansprüche

1. Computerimplementiertes Verfahren zur Generierung eines maschinell lesbaren Diagnosecodes (C) zur Beschreibung eines Fehlers (F) in einem technischen Gerät (G), das Verfahren aufweisend die Schritte:
- Bereitstellen von Identifikations-Information (ID) zur Identifikation des technischen Geräts (G);
- Bereitstellen von Fehler-Information (IF) zur Beschreibung des Fehlers (F);
- Zusammenführen der Identifikations-Information (ID) und der Fehler-Information (IF) in eine Geräte-Fehler-Beschreibungsdatei (TXT), vorzugsweise in Form einer Textdatei oder in Form einer Binärdatei;
- Konvertieren der Geräte-Fehler-Beschreibungsdatei (TXT) in den maschinell lesbaren Diagnosecode (C).

2. Verfahren nach Anspruch 1, **dadurch gekennzeichnet, dass** der maschinell lesbare Diagnosecode (C) auf zumindest eine der folgenden Arten generiert wird: 1D-Code, Strichcode, 2D-Code, gestapelter Code, Matrix-Code, QR-Code, HCCB-Code.

3. Verfahren nach einem der vorhergehenden Ansprüche, **dadurch gekennzeichnet, dass** die Geräte-Fehler-Beschreibungsdatei (TXT) vor der Konvertierung in den Diagnosecode (C) komprimiert wird.

4. Verfahren nach einem der vorhergehenden Ansprüche, **dadurch gekennzeichnet, dass** im Fall des Auftretens eines neuen Fehlers (F) ein neuer Diagnosecode (C) generiert wird.

5. Verfahren nach einem der vorhergehenden Ansprüche, **dadurch gekennzeichnet, dass** im Fall des Auftretens einer Mehrzahl von Fehlern (F1, F2) für jeden Fehler (F1, F2) ein eigener Diagnosecode (C1, C2) generiert wird, wobei die Identifikations-Information (ID) je in gleicher Weise in den jeweiligen Diagnosecode (C1, C2) übertragen wird und die Fehler-Information (IF) je in voneinander unterschiedlicher Weise in den jeweiligen Diagnosecode (C1, C2) übertragen wird.

6. Verfahren nach einem der vorhergehenden Ansprüche, **dadurch gekennzeichnet, dass** die Identifikations-Information (ID) eine URL und/oder eine gerätespezifische Kennung und/oder eine Seriennummer und/oder eine Versionsnummer aufweist **und/oder dass** die Fehler-Information (IF) einen Fehlercode und/oder zumindest einen Messwert und/oder zumindest ein Berechnungsergebnis aufweist.

7. Verfahren nach einem der vorhergehenden Ansprüche, **dadurch gekennzeichnet, dass** anhand einer Fehlerdetektionseinheit (200) im technischen Gerät (G) der Fehler (F) erkannt wird und durch die Fehlerdetektionseinheit (200) die Generierung des Diagnosecodes (C) ausgelöst wird.

8. Verfahren nach Anspruch 7, **dadurch gekennzeichnet, dass** im Fall des Erkennens eines Fehlers (F) neben dem Diagnosecodes (C) eine Fehlermeldung ausgegeben wird, vorzugsweise auf einer graphischen Ausgabeeinheit (400) des technischen Geräts (G).

9. Verfahren nach einem der vorhergehenden Ansprüche, **dadurch gekennzeichnet, dass** auch im Fall eines fehlerfreien Zustandes des Gerätes (G) ein Diagnosecode (C) generiert wird, in welchem ein Hinweis auf den fehlerfreien Zustand codiert wird.

10. Verfahren nach einem der vorhergehenden Ansprüche, ferner umfassend die Schritte
- Anzeigen des Diagnosecodes (C) auf einer graphischen Ausgabeeinheit des technischen Geräts (G);
- Auslesen der Identifikations-Information (ID) und der Fehler-Information (IF) durch Scannen des Diagnosecodes (C) mittels eines mobilen Kommunikationsgerätes (M), vorzugsweise mittels eins Smartphones;
- Übermitteln der Identifikations-Information (ID) und der Fehler-Information (IF) an einen Wartungs-Server (WS), vorzugsweise indem ein Bediener auf eine mit dem Wartungs-Server (WS) verknüpfte Website geleitet wird, auf der die übermittelte Identifikations-Information (ID) und die Fehler-Information (IF) in eine Maske übertragen werden und vom Bediener auf der Website freigegeben werden;
- Ermittlung von Arbeitsschritten (AS) zur Behebung des Fehlers anhand der an den Wartungs-Server (WS) übertragene Identifikations-Information (ID) und Fehler-Information (IF);
- Übermitteln der Arbeitsschritte (AS) an das Kommunikationsgerätes (M);
- Beseitigung des Fehlers durch Ausführen der an das Kommunikationsgerät (M) übermittelten Arbeitsschritte (AS), vorzugsweise durch einen Bediener des technischen Gerätes (G).

11. Verfahren nach einem der vorhergehenden Ansprüche, **dadurch gekennzeichnet, dass** eine Servicestationen für Automobil-Klimaanlagen oder ein Abgasmesssystem oder ein automotives Diagnosesystem oder ein Batterie-Konditioniersystem als technisches Gerät (G) vorgesehen wird.

12. Maschinell lesbarer Diagnosecode (C), aufweisend zumindest einen ersten Code-Anteil (C-1) zur Codierung von Identifikations-Information (ID) zur Identifikation eines technischen Geräts (G) sowie einen zweiten Code-Anteil (C-2) zur Codierung von Fehler-Information (IF) zur Beschreibung eines Fehlers (F) im technischen Gerät (G).

13. Maschinell lesbarer Diagnosecode (C) nach Anspruch 12, generiert durch ein Verfahren nach einem der Ansprüche 1 bis 11.

14. Maschinell lesbarer Diagnosecode (C) nach Anspruch 12 oder 13, **dadurch gekennzeichnet, dass** der maschinell lesbare Diagnosecode (C) ein 1D-Code, vorzugsweise ein Strichcode, oder ein 2D-Code, vorzugsweise ein gestapelter Code oder ein Matrix-Code oder ein QR-Code oder ein HCCB-Code, ist.

15. Technisches Gerät (G) aufweisend eine Steuereinheit (100), eine Fehlerdetektionseinheit (200), einen nichtflüchtigen Speicher (300) und eine Ausgabeeinheit (400), welche ausgestaltet sind zur Ausführung der Schritte:
- mittels des nichtflüchtigen Speichers (300) Bereitstellen von Identifikations-Information (ID) zur Identifikation des technischen Geräts (G);
- mittels der Fehlerdetektionseinheit (200) Bereitstellen von Fehler-Information (IF) zur Beschreibung des Fehlers (F);
- mittels der Steuereinheit (100) Zusammenführen der Identifikations-Information (ID) und der Fehler-Information (IF) in eine Geräte-Fehler-Beschreibungsdatei (TXT), vorzugsweise in Form einer Textdatei oder in Form einer Binärdatei, und Konvertieren der Geräte-Fehler-Beschreibungsdatei (TXT) in den maschinell lesbaren Diagnosecode (C);
- mittels der Ausgabeeinheit (400) Ausgabe des Diagnosecodes (C), wobei die Ausgabeeinheit (400) vorzugsweise eine graphische Ausgabeeinheit ist oder eine Ausgabeschnittstelle zur Übertragung des Diagnosecodes (C) an ein mobiles Kommunikationsgerät (M), vorzugsweise auf ein Smartphone oder einen Tabletcomputer.
